# EUROPEAN PATENT APPLICATION

(11) **EP 3 115 849 A1**
(43) Date of publication of application: **11.01.2017**
(21) Application number: 15175462.9
(22) Date of filing: 06.07.2015
(51) Int. Cl.: G03G 15/20, G03G 15/00, G06F 3/12

(54) **SELECT DEVICE FOR IMAGE FORMING APPARATUS, IMAGE FORMING SYSTEM, AND SELECT METHOD FOR IMAGE FORMING APPARATUS**

(71) Applicant: Kabushiki Kaisha Toshiba, Tokyo 105-8001 (JP); Toshiba TEC Kabushiki Kaisha, Tokyo 141-0032 (JP)
(72) Inventor: OGASAWARA, Masato, Shinagawa-ku, Tokyo 141-0032 (JP)
(74) Representative: Takeuchi, Maya

(57) **Abstract**

According to an embodiment, a select device for an image forming apparatus includes a temperature determination unit and an apparatus select unit. The temperature determination unit determines a temperature state of a heating unit in each of a plurality of image forming apparatuses each of which is connected to a network and has the heating unit. The apparatus select unit selects the image forming apparatus which executes a job based on content of the job and a temperature state of each heating unit which is determined by the temperature determination unit when a job execution request is made from any one of the client terminal or the plurality of image forming apparatuses connected to the network.

## Description

### FIELD

Embodiments described herein relate generally to a select device for an image forming apparatus, an image forming system, and a select method for the image forming apparatus.

### BACKGROUND

An image forming apparatus forms an image while transporting a sheet form medium such as a paper sheet. The image forming apparatus forms an image by fixing toner to the medium. The image forming apparatus forms the image on the medium while switching a fixing temperature according to the type of toner, the type of medium, and the like. However, the image forming apparatus requires for an appropriate time in order to switch the fixing temperature. When the switching frequency of the fixing temperature increases, there is a possibility that the efficiency of image formation is reduced since the time required for switching is increased.

### DESCRIPTION OF THE DRAWINGS

FIG. 1 is a block diagram illustrating an overall configuration example of an image forming system according to an embodiment.
FIG. 2 is a block diagram illustrating a configuration example of a print server according to the embodiment.
FIG. 3 is a diagram schematically illustrating an overall configuration example of an image forming apparatus according to the embodiment.
FIG. 4 is a block diagram illustrating a configuration example of a portion of the image forming apparatus according to the embodiment.
FIG. 5 is a diagram illustrating an example of a new job allocation pattern according to a last job fixing temperature and a new job fixing temperature which each of two image forming apparatuses of the image forming system according to the embodiment has.

### DETAILED DESCRIPTION

In general, according to one embodiment, a select device for an image forming apparatus includes a temperature determination unit and an apparatus select unit. The temperature determination unit determines a temperature state of a heating unit in each of a plurality of image forming apparatuses each of which is connected to a network and has the heating unit. The apparatus select unit selects the image forming apparatus which executes a job base on the content of the job and a temperature state of each heating unit which is determined by the temperature determination unit when a job execution request is made from any one of a client terminal or the plurality of image forming apparatuses connected to the network.

The device may further comprise a memory unit that stores the content of the job and the image forming apparatus that executes the job in association. The temperature determination unit may set a temperature state of the heating unit of the image forming apparatus where execution of the job is incomplete as a temperature state according to the content of the job.

The apparatus select unit may select the image forming apparatus including the heating unit in a temperature state of a temperature region that is the same or is closest to a temperature region according to the content of the job as an image forming apparatus that executes the job.

The apparatus select unit may select the image forming apparatus including the heating unit in the temperature state of the temperature region where a time required for changing until matching the temperature region according to the content of the job is shortest, as an image forming apparatus that executes the job.

The apparatus select unit may select the image forming apparatus that executes the job according to a processing amount of a job to be executed by each of the plurality of image forming apparatuses.

The apparatus select unit may select the image forming apparatus where the processing amount of the job to be executed is smallest among the plurality of image forming apparatuses including the heating unit having temperature information of the temperature region that is the same or is closest to the temperature region according to the content of the job as the image forming apparatus that executes the job.

Preferably, each of the plurality of image forming apparatuses includes an image forming unit that forms an image according to the content of the job, a transfer unit that transfers the image, which is formed by the image forming apparatus, to a transfer material, a fixing unit that fixes the image, which is transferred by the transfer unit, in a temperature region which is controlled according to the content of the job, and the heating unit that heats the fixing unit.

The device may further comprise a display that displays a temperature state of each heating unit which is determined by the temperature determination unit.

The present invention also relates to an image forming system which includes the select device of an image forming apparatus defined above.

An image forming system 100 and a print server 200 according to the embodiment will be described below with reference to the drawings. Here, in each diagram the same configurations are assigned the same reference numerals.

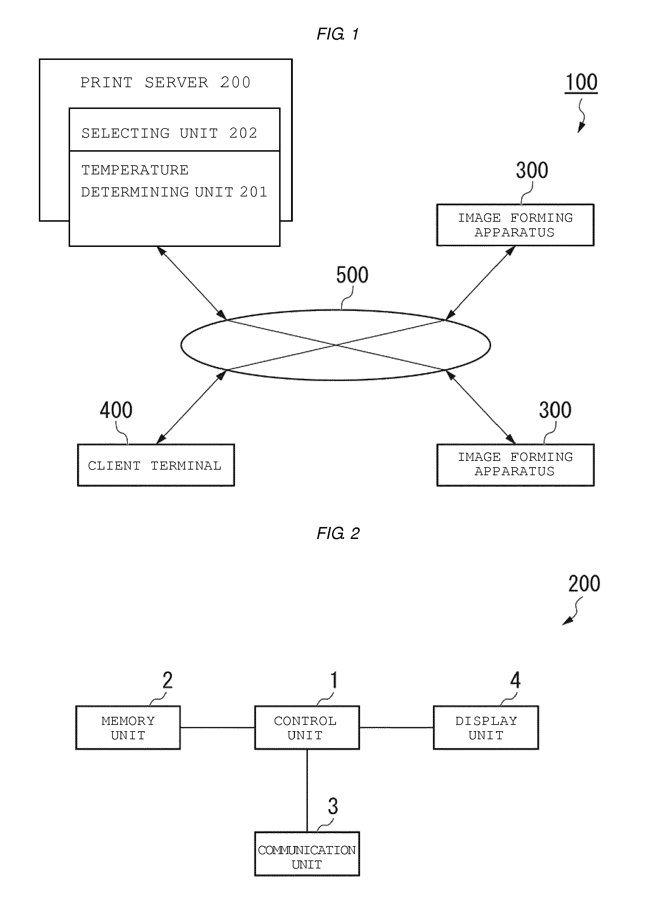

FIG. 1 is a block diagram illustrating an overall configuration example of the image forming system 100 according to the embodiment.

As shown in FIG. 1, the image forming system 100 includes the print server 200, a plurality of image forming apparatuses 300, and at least one client terminal 400. The print server 200, the plurality of image forming apparatuses 300, and at least one client terminal 400 communicate with one another via a network 500.

FIG. 2 is a block diagram illustrating an overall configuration example of the print server 200 according to the embodiment.

As shown in FIG. 2, the print server 200 includes a control unit 1, a memory unit 2, a communication unit 3, and a display unit 4. For example, the print server 200 is a PC, a mobile information terminal device, a server device, or the like. The control unit 1 includes a CPU, a ROM, and a RAM. The control unit 1 controls the plurality of image forming apparatuses 300. The memory unit 2 stores information which is output to the plurality of image forming apparatuses 300. The communication unit 3 performs communication with the plurality of image forming apparatuses 300 and the entire client terminals 400. The display unit 4 displays various kinds of information. The print server 200 includes a temperature determination unit 201 to determine temperature status of each fixing unit 29 of the each image forming apparatus 300. The print server 200 also includes a selecting unit 202 to select one image forming apparatus 300 among the plurality of the image forming apparatus 300.

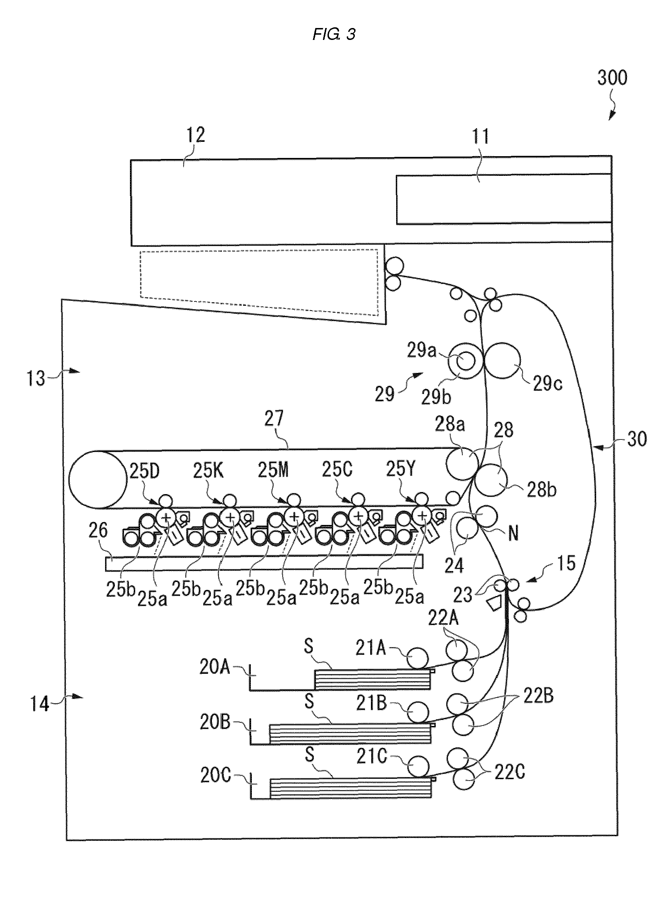

FIG. 3 is a diagram schematically illustrating an overall configuration example of the image forming apparatus 300 according to the embodiment.

As shown in FIG. 3, the image forming apparatus 300 includes a control panel 11, a scanner unit 12, a printer unit 13, a sheet accommodating unit 14, and a transport unit 15.

The scanner unit 12 reads image information of an object to be copied as the contrast of light. The scanner unit 12 outputs read image information to the printer unit 13.

The printer unit 13 forms an output image (hereinafter referred to as a toner image) using a developer agent such as toner based on the image information from the scanner unit 12 or an external section. The printer unit 13 transfers the toner image onto the surface of a sheet S. The printer unit 13 fixes the toner image to the sheet S by applying heat and pressure to the toner image on the surface of the sheet S.

The sheet accommodating unit 14 supplies sheets S one at a time to the printer unit 13 matching the timing at which the printer unit 13 forms the toner image. The sheet accommodating unit 14 includes a plurality of paper feeding cassettes 20A, 20B, and 20C. Each of the paper feeding cassettes 20A, 20B, and 20C stores sheets S of a size or shape which is respectively set in advance. Each of the paper feeding cassettes 20A, 20B, and 20C includes respective pick up rollers 21 A, 21 B, and 21 C. Each of the pick-up rollers 21 A, 21 B, and 21 C picks up sheets S one at a time from each of the paper feeding cassettes 20A, 20B, and 20C. The pick-up rollers 21 A, 21 B, and 21 C supply the picked up sheets S to the transport unit 15.

The transport unit 15 includes a transport roller 23 and a resist roller 24. The transport unit 15 transports the sheets S which are supplied from the pick-up rollers 21 A, 21 B, and 21 C to the resist roller 24. The resist roller 24 transports the sheets S in accordance with the timing at which the printer unit 13 transfers the toner image onto the sheet S. The transport roller 23 abuts a tip end of the sheet S in the transport direction in a nip N of the resist roller 24. The transport roller 23 adjusts the position of the tip end of the sheet S in the transport direction by bending the sheet S. The resist roller 24 transports the sheet S to a transfer unit 28 side which will be described later after the tip end of the sheet S, which is delivered from the transport roller 23, is matched in the nip N.

The printer unit 13 includes a plurality of image forming units 25Y, 25M, 25C, 25K, and 25D, an exposure unit 26, an intermediate transfer belt 27, the transfer unit 28, and a fixing device 29.

Each of the plurality of image forming units 25Y, 25M, 25C, 25K, and 25D forms the toner image which is transferred onto the sheet S. Each of the image forming units 25Y, 25M, 25C, 25K, and 25D includes a photosensitive drum (image carrier) 25a. The plurality of image forming units 25Y, 25M, 25C, 25K, and 25D include a developing device 25b which selective supplies toner to the surface of each photosensitive drum 25a. The developing device 25b accommodates decolorable yellow, magenta, cyan, and black toner and decolorable toner. The decolorable toner decolorizes at a higher temperature than a predetermined decolorizing temperature.

The exposure unit 26 opposes the photosensitive drum 25a of each of the image forming units 25Y, 25M, 25C, and 25K. The exposure unit 26 irradiates laser light onto the surface of the photosensitive drum 25a of each of the image forming units 25Y, 25M, 25C, 25K, and 25D based on image information. The exposure unit 26 develops an electrostatic latent image onto the surface of the photosensitive drum 25a of each of the image forming units 25Y, 25M, 25C, 25K, and 25D. The image forming unit 25Y develops the electrostatic latent image using laser light from the exposure unit 26 using yellow toner. The image forming unit 25Y forms a yellow toner image on the surface of the photosensitive drum 25a. The image forming unit 25M develops the electrostatic latent image using laser light from the exposure unit 26 using magenta toner. The image forming unit 25M forms a magenta toner image on the surface of the photosensitive drum 25a. The image forming unit 25C develops the electrostatic latent image using laser light from the exposure unit 26 using cyan toner. The image forming unit 25C forms a cyan toner image on the surface of the photosensitive drum 25a. The image forming unit 25K develops the electrostatic latent image using laser light from the exposure unit 26 using black toner. The image forming unit 25K forms a black toner image on the surface of the photosensitive drum 25a. The image forming unit 25D develops the electrostatic latent image using laser light from the exposure unit 26 using decolorable toner. The image forming unit 25D forms a decolorable toner image on the surface of the photosensitive drum 25a.

Each of the image forming units 25Y, 25M, 25C, 25K, and 25D carries out transfer (primary transfer) of the toner image on the surface of the photosensitive drum 25a onto the intermediate transfer belt 27. Each of the image forming units 25Y, 25M, 25C, 25K, and 25D imparts transfer bias to the toner image at each of the primary transfer positions. Each of the image forming units 25Y, 25M, 25C, and 25K transfers toner images of each color by being superimposed on the intermediate transfer belt 27. Each of the image forming units 25Y, 25M, 25C, and 25K forms color toner images on the intermediate transfer belt 27.

The transfer unit 28 transfers the charged toner image on the intermediate transfer belt 27 onto the surface of the sheet S at a secondary transfer position. The secondary transfer position is a position which opposes a support roller 28a and a secondary roller 28b. The transfer unit 28 imparts transfer bias to the secondary transfer position according to the transfer current. The transfer unit 28 transfers the toner image on the intermediate transfer belt 27 to the sheet S by the transfer bias.

The fixing device 29 includes a heat roller 29b which is built into a heating unit 29a, and a pressure roller 29c. The pressure roller 29c is in contact with a fixing belt which is heated by the heat roller 29b in a pressurized state. The fixing device 29 fixes the toner image on the surface of the sheet S by apply heat and pressure to the sheet S. An appropriate first temperature region A with regard to the fixing of the decolorable toner is smaller than an appropriate second temperature region B with regard to the fixing of the non-decolorable toner. The first temperature region A is, for example, 85°C to 100°C. The second temperature region B is, for example, 110°C to 140°C. The temperature of the fixing device 29 is detected by a sensor 31 provided near the heating unit 29a. The detected temperature information is sent to the printer control unit 331

The printer unit 13 includes a reversing unit 30. The reversing unit 30 reverses the sheet S which is discharged from the fixing device 29 by switch back. The reversing unit 30 transports the sheet S after reversal to in front of the resist roller 24 again. The reversing unit 30 reverses the sheet S in order to form the image on the rear surface of the sheet S which is formed by a fixing process.

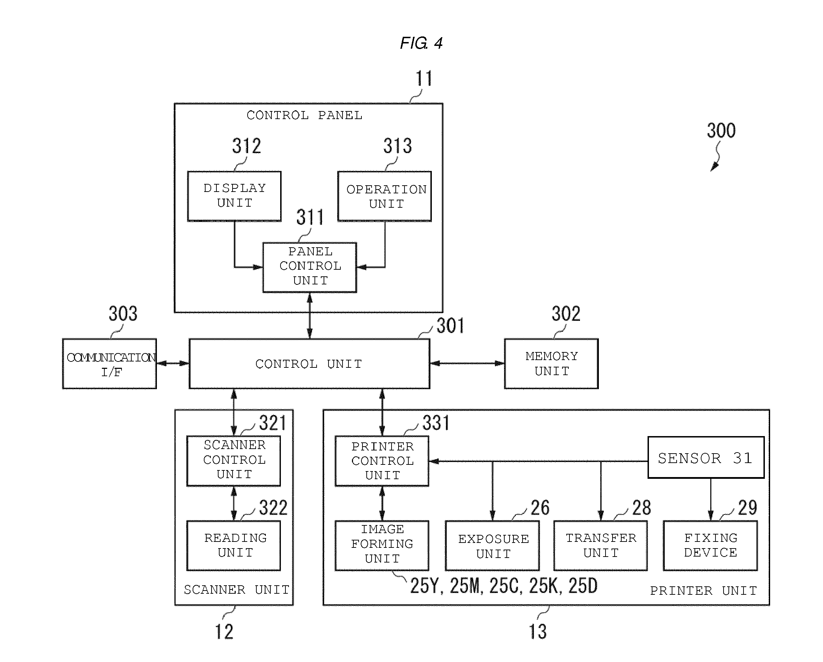

The configuration of the image forming apparatus 300 will be described below with reference to FIG. 4. FIG. 4 is a block diagram illustrating a configuration example of some of the image forming apparatuses 300.

The control panel 11, the scanner unit 12, and the printer unit 13 are connected to the control unit 301. The control unit 301 controls each CPU of the control panel 11, the scanner unit 12, and the printer unit 13 which will be described later. The control unit 301 controls the operation of all of the image forming apparatuses 300. The control unit 301 includes a CPU, a ROM, and a RAM. The control unit 301 is connected to a memory unit 302 and a communication I/F 303. The control unit 301 communicates with the printer server 200 to send a temperature information based on the temperature detected by a sensor 31.

The memory unit 302 stores image information from the scanner unit 12 or an external section. For example, the memory unit 302 is a hard disk device, a semiconductor memory, or the like.

The control panel 11 includes a panel control unit 311, a display unit 312, and operation unit 313. The panel control unit 311 includes a CPU, a ROM, and a RAM. The panel control unit 311 controls the control panel 11.

The display unit 312 outputs an image according to operation content, or an image according to an instruction from the panel control unit 311.

The operation unit 313 receives an operation from a user and outputs a signal, which indicates the operation content, to the panel control unit 311. The operation unit 313 has various kinds of keys.

The display unit 312 and the operation unit 313 may be a generally formed touch panel type.

The panel control unit 311 displays various types of information such as the number of printing sheets, the size of the sheet S, and the type of sheet S on the display unit 312. The operation unit 313 receives designation and modification information which is displayed by the display unit 312. For example, the operation unit 313 receives designation information which indicates the type of sheet S. The operation unit 313 outputs the information which indicates the type of sheet S which is designated to the printer unit 13.

The scanner unit 12 includes a scanner control unit 321 and a reading unit 322. The scanner control unit 321 includes a CPU, a ROM, and a RAM. The scanner control unit 321 controls reading of the image information using the reading unit 322.

The printer unit 13 includes a printer control unit 331. The printer control unit 331 includes a CPU, a ROM, and a RAM. The printer control unit 331 controls printing of an image to the sheet S using the printer unit 13. The printer control unit 331 includes a CPU, a ROM, and a RAM. The printer control unit 331 writes various information which is designated by the control panel 1 to the in-built RAM.

For example, the client terminal 400 is a PC, a mobile information terminal device, or the like.

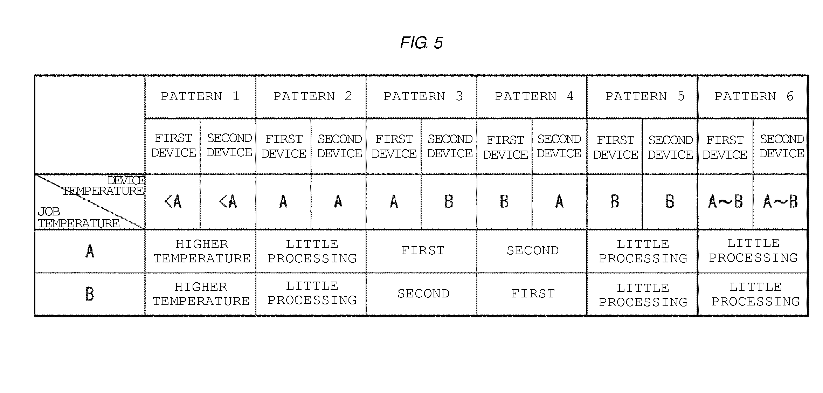

The operation of the image forming system 100 will be described below with reference to FIG. 5. FIG. 5 is a diagram illustrating an example of a new job allocation pattern according to a last job fixing temperature and a new job fixing temperature which each of two image forming apparatuses 300 has. The two image forming apparatuses 300 are a first image forming apparatus 300 and a second image forming apparatus 300.

A plurality of image forming apparatuses 300 or client terminals 400 output instruction information (a job) which instructs generation of image formation according to a user instruction. The control unit 1 of the print server 200 acquires a job where an execution request is made from either of the plurality of image forming apparatuses 300 or client terminals 400. The control unit 1 determines whether the job is delivered to any one of the plurality of image forming apparatuses 300. The job contains image information which relates to an image which is formed by each image forming apparatus 300 and control information which relates to image formation. For example, the image information is data for printing and the like which is output by a printer driver with respect to electronic data such as a document which is created by a user. For example, the electronic data of the document or the like includes color information which is related to the display color, printing color, and the like. For example, the data for printing is PDL (page description language) data or the like. For example, the control information is generated according to the input or the like of a user with regard to a settings screen of the printer driver. The control information includes the type of paper, the number of printing sheets, and the type of toner which is used in image formation or data such as printing color which is related to the type of toner. For example, the type of paper is the size, the thickness, or the like of the paper. For example, the type of toner is presence or absence of decolorable toner (decolorable toner and non-decolorable toner) or the like. The information such as thickness of the paper and presence or absence of decolorable toner in the control information is temperature instruction information which specifies the temperature of the heating unit 29a of the fixing device 29 in each of the image forming apparatuses 300.

Each of the plurality of image forming apparatuses 300 operates the printer unit 13 according to the job from the print server 200. The printer control unit 331 controls each of the image forming units 25Y, 25M, 25C, 25K, and 25D, the exposure unit 26, the transfer unit 28, and the fixing device 29 according to the control information of the job. The printer control unit 331 matches the temperature (fixing temperature) or the temperature region of the heating unit 29a of the fixing device 29 to the temperature or the temperature region of the temperature instruction information of the job.

When a new job is output, the control unit 1 of the print server 200 selects an output destination according to the temperature information of each of the image forming apparatuses 300 and a processing amount of the job to be executed. The control unit 1 determines the temperature state (for example, the fixing temperature) of the heating unit 29a of the fixing device 29 in each of the plurality of image forming apparatuses 300. The temperature information of the image forming apparatus 300 is the current temperature of the fixing device 29 when the image forming apparatus 300 does not maintain another job to be executed in at appropriate buffer or the like. When the image forming apparatus 300 does not acquire the current temperature of the fixing device 29, the temperature information of the image forming apparatus 300 is the temperature or the like according to temperature instruction information of the job where the execution is most recently completed. When the image forming apparatus 300 maintain another job to be executed, the temperature information of the image forming apparatus 300 is the temperature according to temperature instruction information of the last job to be executed. The control unit 1 reads the temperature instruction information of the job which each of the image forming apparatuses 300 has recently completed execution and the temperature instruction information of the last job to be executed from the memory unit 2. The control unit 1 reads the information on the processing amount of the job to be executed by the image forming apparatus 300 from the memory unit 2. The memory unit 2 stores the job which the control unit 1 outputs previously in association with the image forming apparatus 300 which is the output destination. The control unit 1 displays the temperature information of the plurality of image forming apparatuses 300 and the processing amount of the job to be executed on the display unit 4.

When a new job is output, the control unit 1 outputs the job to the image forming apparatus 300 which has the temperature information of the temperature region which is the same or is closest to the temperature region of the temperature instruction information of the job. The control unit 1 displays information which associates the newly output job and the image forming apparatus 300 which is the output destination of the job on the display unit 4.

For example, in a pattern 1 which is illustrated in FIG. 5, the temperature region of the temperature information in each of the first image forming apparatus 300 and the second image forming apparatus 300 is smaller than the first temperature region A. When the temperature region of the temperature instruction information of the job is the first temperature region A, the control unit 1 outputs the job to the image forming apparatus 300 which contains the temperature information of the highest temperature region. When the temperature region of the temperature instruction information of the job is the second temperature region B, the control unit 1 outputs the job to the image forming apparatus 300 which contains the temperature information of the highest temperature region.

For example, in a pattern 3 which is illustrated in FIG. 5, the temperature region of the temperature information of the first image forming apparatus 300 is the first temperature region A. The temperature region of the temperature information of the second image forming apparatus 300 is the second temperature region B. When the temperature region of the temperature instruction information of the job is the first temperature region A, the control unit 1 outputs the job to the first image forming apparatus 300 which contains the temperature information of the first temperature region A. When the temperature region of the temperature instruction information of the job is the second temperature region B, the control unit 1 outputs the job to the second image forming apparatus 300 which contains the temperature information of the second temperature region B.

For example, in a pattern 4 which is illustrated in FIG. 5, the temperature region of the temperature information of the first image forming apparatus 300 is the second temperature region B. The temperature region of the temperature information of the second image forming apparatus 300 is the first temperature region A. When the temperature region of the temperature instruction information of the job is the first temperature region A, the control unit 1 outputs the job to the second image forming apparatus 300 which contains the temperature information of the first temperature region A. When the temperature region of the temperature instruction information of the job is the second temperature region B, the control unit 1 outputs the job to the first image forming apparatus 300 which contains the temperature information of the second temperature region B.

When the temperature regions of the plurality of image forming apparatuses 300 are the same, the control unit 1 outputs the job to the image forming apparatus 300 where the processing amount of the job to be executed is the least.

For example, in a pattern 2 which is illustrated in FIG. 5, the temperature region of the temperature information in each of the first image forming apparatus 300 and the second image forming apparatus 300 is the first temperature region A. For example, in a pattern 5 which is illustrated in FIG. 5, the temperature region of the temperature information in each of the first image forming apparatus 300 and the second image forming apparatus 300 is the second temperature region B. For example, in a pattern 6 which is illustrated in FIG. 5, the temperature region of each of the first image forming apparatus 300 and the second image forming apparatus 300 is between the first temperature region A and the second temperature region B. For example, a state where the temperature region of the image forming apparatus 300 is between the first temperature region A and the second temperature region B is a state where the fixing temperature is reduced after completion of the execution of the job of the second temperature region B or the like. The control unit 1 outputs the job to the image forming apparatus 300 where the processing amount of the job to be executed is smallest in each of pattern 2, pattern 5, and pattern 6.

The print server 200 in the execution state which is described above includes the control unit 1 which selects the output destination of the job according to the temperature instruction information of the job and the temperature information of the plurality of image forming apparatuses 300. It is possible for the print server 200 to suppress it being necessary to change the fixing temperature when each of the image forming apparatuses 300 executes the job due to the control unit 1. It is possible to prevent the waiting time which is required to change the fixing temperature increasing and improve the printing efficiency by suppressing the change of fixing temperature of each of the image forming apparatuses 300.

It is possible to improve the printing efficiency due to the control unit 1 which selects the output destination of the new job according to the temperature information of the plurality of image forming apparatuses 300 and the processing amount of the job to be executed. It is possible to suppress a change in the fixing temperature by the control unit 1 which outputs the job to the image forming apparatus 300 which has the temperature region which is the same or is closest to the temperature region of the job. When the temperature regions of the plurality of image forming apparatuses 300 are the same, it is possible to improve printing efficiency since the control unit 1 selects the image forming apparatus 300 where the processing amount of the job to be executed is smallest.

It is possible for the state of the plurality of image forming apparatuses 300 to be made to be recognized by a user due to the display unit 4 which displays the temperature information of the plurality of image forming apparatuses 300 and a processing amount of the job to be executed. It is possible to make a user recognize the image forming apparatus 300 which executes a new job and improve convenience due to the display unit 4 which displays information which is associated with the new job and the output destination.

It is possible to ascertain the temperature information at an appropriate timing such as after each image forming apparatus 300 executes the last job to be executed due to the memory unit 2 which stores the job in association with the output destination. It is possible to appropriately select the output destination of the new job since it is possible to ascertain the temperature information at an appropriate timing not limited to the current temperature information of each of the image forming apparatuses 300.

A modified example of the present embodiments is described below.

In the print server 200 according to the embodiments described above, the control unit 1 outputs the job to the image forming apparatus 300 where the processing amount of the job to be executed is smallest, but is not limited thereto.

In the print server 200 according to the modified example, the control unit 1 may output the job to the image forming apparatus 300 where the time required to change the fixing temperature to the temperature region of the job is shortest. It is possible to prevent the waiting time which is required to change the fixing temperature increasing since the control unit 1 selects the image forming apparatus 300 where the change of the fixing temperature is fastest.

In the print server 200 according to the modified example, the control unit 1 may select the output destination of the job by comparing the processing amount of the job to be executed and the time required to change the fixing temperature. It is possible to prevent the waiting time increasing and improve printing efficiency by the control unit 1 selecting the image forming apparatus 300 where the execution start of the new job is fastest.

In the embodiments described above, the first temperature region A and the second temperature region B which are appropriate for fixing each toner of decolorable toner and non-decolorable toner are described, but are not limited thereto. In place of the first temperature region A and the second temperature region B, a third temperature region C and a fourth temperature region D may be used which are appropriate for each of normal paper and thick paper where the thicknesses are different at a certain printing speed. The third temperature region C with regard to the normal paper is relatively smaller than the fourth temperature region D with regard to the thick paper.

In the image forming system 100 according to the embodiments described above, the print server 200 controls output of a new job, but is not limited thereto.

In the image forming system 100 according to the modified example, instead of the print server 200, the control unit 301 of any one of the plurality of image forming apparatuses 300 may control the output of the new job.

In the image forming system 100 according to the modified example, instead of the print server 200, a server device or the like which is connected to the network 500 may control the output of the new job.

In the image forming system 100 according to the embodiments described above, the control unit 1 of the print server 200 controls output of a new job according to a user instruction, but is not limited thereto.

In the image forming system 100 according to the modified example, the control unit 1 may control output of the image information which is read by the scanner unit 12 of any one of the plurality of image forming apparatuses 300. The control unit 1 may output the image information from the scanner unit 12 of each of the image forming apparatuses 300 to any one of the plurality of image forming apparatuses 300 according to information which relates to the temperature in the image information.

In the image forming system 100 according to the embodiments described above, the job is set as a print job which contains data for printing or the like, but is not limited thereto.

In the image forming system 100 according to the modified example, the job may be set as a job where decolorizing of paper due to heating of the fixing device 29 is executed or the like.

The image forming apparatus 300 according to the embodiments described above includes the plurality of image forming units 25Y, 25M, 25C, and 25K which use non-decolorable toner of a plurality of colors, but is not limited thereto.

The image forming apparatus 300 according to the modified example may also be a monochrome image forming apparatus which includes any one of the plurality of image forming units 25Y, 25M, 25C, and 25K.

In the embodiments described above, each CPU of the print server 200 and the image forming apparatus 300 may function by executing a program. The program may be recorded on a recording medium that is readable by a computer, and may be sent via an electric communication line. For example, the recording medium is a portable medium such as a flexible disk, a magneto-optical disk, a ROM, and a CD-ROM, or a memory device such as a hard disk which is built into a computer system.

In the embodiments described above, all or a portion of the functions of each CPU of the print server 200 and the image forming apparatus 300 may be achieved using hardware. For example, the hardware is an LSI (large scale integration), an ASIC (application specific integrated circuit), a PLD (programmable logic device), an FPGA (field programmable gate array) and the like.

According to at least one of the embodiments described above, it is possible to suppress change of the fixing temperature when each of the image forming apparatuses 300 execute a job due to the control unit 1. It is possible to prevent the changing time of the fixing temperature increasing since the control unit 1 selects the output destination of the job according to the temperature instruction information of the job and the temperature information of the plurality of image forming apparatuses 300. It is possible to improve printing efficiency due to the control unit 1 which prevents the time required to change the fixing temperature being increased.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A select device of an image forming apparatus comprising:
a temperature determination unit configured to determine a temperature state of a heating unit in each of a plurality of image forming apparatuses each of which is connected to a network and has the heating unit; and
an apparatus select unit configured to select the image forming apparatus which executes a job based on content of the job and a temperature state of each heating unit which is determined by the temperature determination unit when a job execution request is made from any one of a client terminal or the plurality of image forming apparatuses connected to the network.

2. The device according to claim 1, further comprising:
a memory unit configured to store the content of the job and the image forming apparatus that executes the job in association,
wherein the temperature determination unit sets a temperature state of the heating unit of the image forming apparatus where execution of the job is incomplete as a temperature state according to the content of the job.

3. The device according to claim 1 or 2,
wherein the apparatus select unit is configured to select the image forming apparatus including the heating unit in a temperature state of a temperature region that is the same or is closest to a temperature region according to the content of the job as an image forming apparatus that executes the job.

4. The device according to any one of claims 1 to 3,
wherein the apparatus select unit is configured to select the image forming apparatus including the heating unit in the temperature state of the temperature region where a time required for changing until matching the temperature region according to the content of the job is shortest, as an image forming apparatus that executes the job.

5. The device according to any one of claims 1 to 4,
wherein the apparatus select unit is configured to select the image forming apparatus that executes the job according to a processing amount of a job to be executed by each of the plurality of image forming apparatuses.

6. The device according to claim 5,
wherein the apparatus select unit is configured to select the image forming apparatus where the processing amount of the job to be executed is smallest among the plurality of image forming apparatuses including the heating unit having temperature information of the temperature region that is the same or is closest to the temperature region according to the content of the job as the image forming apparatus that executes the job.

7. The device according to any one of claims 1 to 6,
wherein each of the plurality of image forming apparatuses includes an image forming unit configured to form an image according to the content of the job, a transfer unit configured to transfer the image, which is formed by the image forming apparatus, to a transfer material, a fixing unit configured to fix the image, which is transferred by the transfer unit, in a temperature region which is controlled according to the content of the job, and the heating unit configured to heat the fixing unit.

8. The device according to any one of claims 1 to 7, further comprising:
a display unit configured to display a temperature state of each heating unit which is determined by the temperature determination unit.

9. An image forming system which includes the select device of an image forming apparatus according to any one of claims 1 to 8.
